# EUROPÄISCHE PATENTSCHRIFT

(11) **EP 3 020 971 B1**
(45) Veröffentlichungstag und Bekanntmachung des Hinweises auf die Patenterteilung: **13.12.2017**
(21) Anmeldenummer: 15188978.9
(22) Anmeldetag: 08.10.2015
(51) Int. Cl.: F04B 27/14, F16B 21/18

(54) **KÄLTEMITTELVERDICHTER**
COOLANT COMPRESSOR
COMPRESSEUR DE REFRIGERANT

(30) Priorität: 14.11.2014 DE 102014223262
(43) Veröffentlichungstag der Anmeldung: 18.05.2016
(73) Patentinhaber: Volkswagen Aktiengesellschaft, 38440 Wolfsburg (DE)
(72) Erfinder: Mylo, Thomas, 38542 Leiferde (DE)

(56) Entgegenhaltungen:
- EP-A1- 2 573 394
- DE-A1-102008 052 279
- JP-A- 2006 242 003

## Beschreibung

Die Erfindung betrifft einen Kältemittelverdichter nach dem Oberbegriff des Patentanspruchs 1 der Erfindung.

Kältemittelverdichter sind seit geraumer Zeit bekannt. Sie dienen dazu, gasförmiges Kältemittel im Kreislauf einer Klimaanlage, beispielsweise einer Klimaanlage eines Kraftfahrzeugs, zu verdichten. Der Kältemittelverdichter arbeitet beispielsweise nach dem Prinzip einer Axialkolbenpumpe mit einer Mehrzahl gleichmäßig über einen Umfang verteilt angeordneter und in je einem Zylinder geführter Kolben. Die Kolben werden mittels einer drehangetriebenen Schräg- oder Schwenkscheibe (oder auch Taumelscheibe, Schwenkring) axial bewegt. Im Zylinderkopf sind für jeden Zylinder Flatterventile vorgesehen, die entsprechend der Kolbenbewegung den Weg zur Druck- oder Saugseite freigeben (vgl. z. B. DE 43 26 366 A1).

Überdies kann ein Regelventil zur variablen Einstellung des Kolbenhubs des Kältemittelverdichters vorgesehen sein. Das Regelventil ist durch einen in einer Bohrung des Gehäuses des Kältemittelverdichters axial eingesetzten und mittels beispielsweise eines Nutenrings von außen axial fixierten Ventilkörper gebildet (vgl. Internetseite: http://www.denso-am.co.uk/media/74742/lft_ac_compressor_web_uk.pdf).

Bei abgeschalteter Kälteanlage wirkt auf das Regelventil ein Systemdruck (Innendruck oder Kältemitteldruck) von bis zu 90 bar gegenüber der äußeren Umgebung. Abhängig vom Anwendungsfall kann Bedarf nach einer gesicherten Fixierung des Regelventils bestehen. Aus der DE 10 2004 001 378 A1 ist bereits eine Maßnahme zur Sicherung eines Sprengrings bekannt, welcher Sprengring in einer Ringnut eines Hohlrades eines Getriebes angeordnet ist und einen im Hohlrad aufgenommenen Hohlradträger in axialer Richtung fixiert. Um ein schwingungsbedingtes selbsttätiges Lösen des Sprengrings aus der Ringnut zu verhindern, ist zwischen den Stirnflächen des Sprengrings ein einstückig mit dem Hohlradträger ausgebildetes keilförmiges Sperrelement angeordnet, welches mit keilförmigen Stirnflächen des Sprengrings korrespondiert und den Sprengring in Umfangsrichtung fixiert. Die DE 10 2005 055 360 A1 beschreibt ein Rückschlagventil, insbesondere zur Anwendung in einem Kraftstoffeinspritzsystem, mit einem Ventilglied, mit einem Ventilsitz, und mit einer Ventilfeder, wobei sich die Ventilfeder einenends gegen das Ventilglied und anderenends gegen ein Widerlager abstützt. Das Ventilglied ist als Hülse ausgebildet und in einer Bohrung axial verschiebbar geführt. Das Widerlager ist mittels eines Spreng- bzw. Nutenrings mit Rundquerschnitt in axialer Richtung fixiert. Das Widerlager bildet sprengringseitig einen Axialvorsprung aus, der infolge Federkraft der Ventilfeder in den vom Sprengring umgebenden Raum eindringt. Das Widerlager mit Axialvorsprung bildet dabei eine Anschlagfläche nach Art einer ringförmigen schräg verlaufenden Kegelstumpffläche aus, wodurch der Sprengring radial in die den Sprengring aufnehmende Umfangs- bzw. Ringnut gepresst und so gesichert werden soll. Bei einem etwaigen Versagen des Sprengrings, beispielsweise bei Bruch desselben ist jedoch die axiale Fixierung des Widerlagers nicht mehr 100%ig gewährleistet. Es besteht die Möglichkeit, dass unter ungünstigen Schwingungsbedingungen der Sprengring aufgrund des federkraftbeaufschlagten Widerlagers und der schrägen Anschlagfläche aus der Umfangsnut austritt mit der Folge, dass die Funktion des Kraftstoffeinspritzsystems zumindest beeinträchtigt ist. Die JP 2006 242003 A beschreibt ein Regelventil eines Kältemittelverdichters, dessen Ventilkörper mittels eines Nutenringes innerhalb einer Bohrung des Gehäuses des Kältemittelverdichters axial gesichert ist, indem der Ventilkörper mit einer ringförmigen Kontaktfläche axial am Nutenring anliegt. Auf der umgebungsdruckbeaufschlagten Außenseite des Ventilkörpers ist ein einziger Axialvorsprung vorgesehen, der infolge Innendruckbeaufschlagung des Ventilkörpers in den vom Nutenring umgebenden Raum formschlüssig eindringt und zumindest eine Begrenzungsfläche ausbildet, vermittels derer der Nutenring radial fixiert ist. Die Kontaktfläche verläuft dabei orthogonal zur Wirkrichtung der auf den Ventilkörper wirkenden axialen Kraft, wogegen die zumindest eine Begrenzungsfläche in Wirkrichtung der besagten Kraft verläuft. Die DE 10 2008 052 279 A1 beschreibt einen gattungsgemäßen Kältemittelverdichter mit einem Regelventil, dem es jedoch an einer radialen Sicherung eines Nutenrings mittels Axialvorsprungs des Ventilkörpers mangelt. Auch aus der EP 2 573 394 A1 ist ein mittels eines Nutenrings axial gesichertes Regelventil eines Kältemittelverdichters bekannt, welchem Regelventil es ebenfalls an einer radialen Sicherung eines Nutenrings mittels Axialvorsprungs des Ventilkörpers mangelt.

Aufgabe der Erfindung ist es, einen Kältemittelverdichter mit einer mittels eines Nutenrings bewirkten Axialsicherung, vorliegend einer Axialsicherung eines Ventilkörpers zu schaffen, welche Axialsicherung die vorbeschriebenen Nachteile des Standes der Technik nicht aufweist.

Ausgehend von einem Kältemittelverdichter, mit einem in Bezug auf die Umgebung überdruckbeaufschlagten Innendruckbereich sowie mit einem Regelventil, wobei das Regelventil durch einen in einer Bohrung eines Gehäuses des Kältemittelverdichters axial verschiebbaren und vom Innendruckbereich axial überdruckbeaufschlagten Ventilkörper gebildet ist, welcher Ventilkörper mittels eines Nutenringes innerhalb der Bohrung axial gesichert ist, indem der Ventilkörper mit einer ringförmigen Kontaktfläche axial am Nutenring anliegt, und wobei die Kontaktfläche orthogonal zur Wirkrichtung der auf den Ventilkörper wirkenden axialen Kraft "F" und die zumindest eine Begrenzungsfläche in Wirkrichtung der besagten Kraft "F" verlaufen, wird die gestellte Aufgabe dadurch gelöst, dass auf der umgebungsdruckbeaufschlagten Außenseite des Ventilkörpers zwei oder mehr nockenartige Axialvorsprünge vorgesehen oder ausgebildet sind, welche infolge Innendruckbeaufschlagung des Ventilkörpers in den vom Nutenring umgebenden Raum formschlüssig eindringen und teilkreisartige Begrenzungsflächen ausbilden, vermittels derer der Nutenring radial fixiert ist. Durch diese Maßnahme ist bei anliegendem Systemdruck (Innendruckbereich) eine Axialsicherung für das Regelventil des Kältemittelverdichters geschaffen, welche auch bei beispielsweise einem Versagen des Nutenringes, wie einem Bruch desselben, ein undefiniertes Lösen der Axialsicherung verhindert. Die Verriegelung der Axialsicherung erfolgt demgemäß nur über den Systemdruck nicht über ein Federelement, wie es der Stand der Technik (DE 10 2005 055 360 A1) favorisiert. Der zumindest eine Axialvorsprung erlaubt lediglich die Zustände geöffnet und gesperrt respektive verriegelt. Die Wirksamkeit der erfolgten Verriegelung ist unabhängig vom Systemdruck sofern dieser ausreicht, den Ventilkörper mit seinem Axialvorsprung im vom Nutenring umgebenden Raum zu positionieren. Darüber hinaus ist auch ein versehentliches Lösen des Nutenringes bei anliegendem Systemdruck (Missbrauchsfall) wirkungsvoll verhindert.
Die Unteransprüche beschreiben bevorzugte Weiterbildungen oder Ausgestaltungen der Erfindung.
Danach weist der Nutenring einen rechteckigen oder quadratischen Querschnitt mit demgemäß rechtwinklig zueinander angeordneten Außenflächen auf. Hierdurch ist der zwischen dem Nutenring und dem Ventilkörper mit den Axialvorsprüngen realisierte Formschluss besonders wirkungsvoll. Wie die Erfindung noch vorsieht, weist der Nutenring nach radial innen gerichtete oder vorwölbende gelochte Enden zur Handhabung des Nutenrings mittels eines geeigneten Werkzeugs, wie einer Nutenring-Zange auf. In Fortbildung der Erfindung sind die besagten Enden von je einem Axialvorsprung in Umfangsrichtung fixiert, wodurch der besagte Formschluss zwischen dem Nutenring und dem Ventilkörper noch weiter verbessert ist. Eine etwaige unerwünschte Bewegung des Nutenrings in Umfangsrichtung relativ zum Ventilkörper ist hierdurch wirkungsvoll verhindert. Bevorzugt handelt es sich bei dem in Rede stehenden Kältemittelverdichter um einen Kältemittelverdichter des Schwenkscheibentyps, Taumelscheibentyps oder Schwenkringtyps mit einem durch einen Ventilkörper gebildeten Regelventil zur variablen Einstellung eines Kolbenhubs oder zum Ein- und Ausschalten des Kältemittelverdichters.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: eine Teilansicht (perspektivische Aufsicht) auf einen Kältemittelverdichter mit einem axial druckbeaufschlagten und mittels eines Nutenrings axial gesicherten Ventilkörper in zwei beispielgebenden Ausführungsvarianten (Ausführungsbeispiel der Erfindung),
- Fig. 2: äußerst schematisch einen Teilschnitt "I-I" nach Fig. 1 in einer Montagesituation des Ventilkörpers,
- Fig. 3: den Schnitt "I-I" nach Fig. 1 in einer Endmontagesituation des Ventilkörpers,
- Fig. 4: eine Teilansicht (perspektivische Aufsicht) auf einen Kältemittelverdichter mit einem axial druckbeaufschlagten und mittels eines Nutenrings axial gesicherten Ventilkörper gemäß einer dritten Ausführungsvariante (steht nicht unter dem Gegenstand der Erfindung), und
- Fig. 5: den Schnitt "II-II" nach Fig. 1 in einer Endmontagesituation des Ventilkörpers.

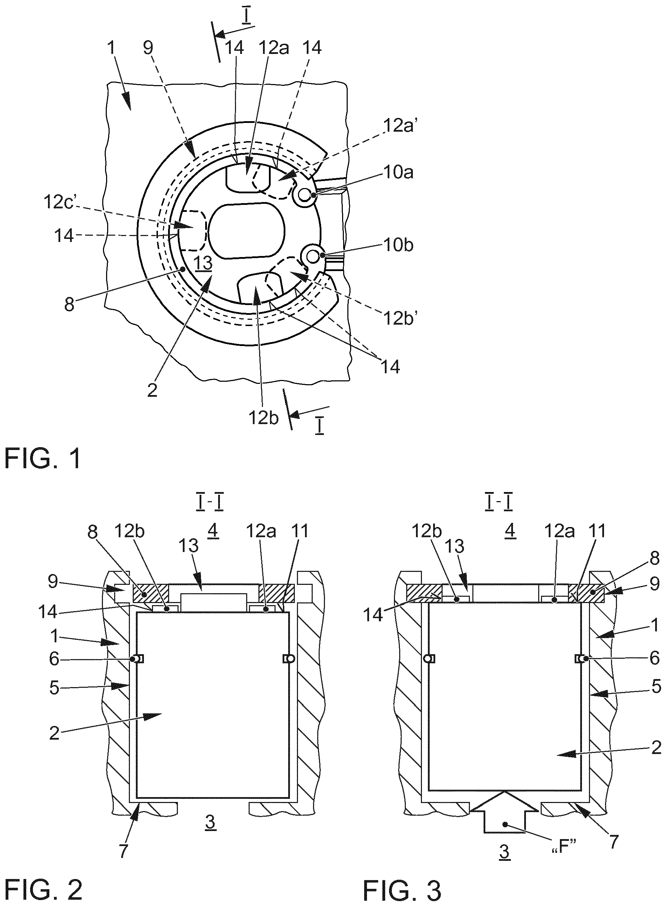

### Ausführungsbeispiel der Erfindung (Fig. 1 bis 3):

Die Fig. 1 bis 3 zeigen lediglich den erfindungswesentlichen Bereich des Gehäuses 1 eines Kältemittelverdichters des beispielsweisen Schwenkscheibentyps, mit einem Regelventil, welches als Baueinheit durch einen sogenannten Ventilkörper 2 gebildet ist. Die Funktionsteile des Regelventils sind im Detail nicht näher dargestellt und beschrieben, da nicht erfindungswesentlich. Wie eingangs bereits ausgeführt, dient besagtes Regelventil der variablen Einstellung des Kolbenhubs oder zum Ein- und Ausschalten des besagten Kältemittelverdichters. Der Kältemittelverdichter weist einen Innendruckbereich 3 und einen Umgebungsdruckbereich 4 auf. Der Druck im Innendruckbereich 3 respektive der Systemdruck oder Kältemitteldruck kann bis zu 90 bar betragen bei abgeschalteter Kälteanlage.

Der Ventilkörper 2 ist vorliegend zylindrisch ausgebildet und in eine den Innendruck- mit dem Umgebungsdruckbereich 3, 4 verbindende Bohrung 5 des Gehäuses 1 axial verschiebbar angeordnet. Der Ventilkörper 2 wird während der Montage vom Umgebungsdruckbereich 4 her in besagte Bohrung 5 axial eingeführt. Der Ventilkörper 2 schließt unter Vermittlung zumindest eines Dichtelements 6, wie einer Ringdichtung, insbesondere O-Ring-Dichtung, dicht an die Innenmantelfläche der Bohrung 5 an. Die Bohrung 5 weist innendruckbereichsseitig eine Stufe 7 auf, die die Einschubtiefe des Ventilkörpers 2 begrenzt.

Nach dem Einsetzen des Ventilkörpers 2 in die Bohrung 5 wird der Ventilkörper 2 axial gesichert. Hierzu ist ein Nutenring 8 vorgesehen, der seinerseits umgebungsdruckbereichsseitig der Bohrung 5 in eine Ringnut 9 der Bohrung 5 eingesetzt wird/ist und auch als Innen-Sicherungsring bezeichnet wird. Hierzu weist der Nutenring 8 nach radial innen gerichtete oder reichende gelochte Enden 10a, 10b zur Handhabung des Nutenrings 8 mittels eines geeigneten, nicht zeichnerisch dargestellten, jedoch an sich bekannten Werkzeugs, wie einer Nutenring-Zange auf. Steht ein ausreichend hoher Systemdruck an, wird der Ventilkörper 2 infolge einer daraus resultierenden, axial auf denselben wirkenden Kraft "F" mit einer ringförmigen Kontaktfläche 11 axial gegen den Nutenring 8 gepresst. Die Kontaktfläche 11 verläuft orthogonal zur Wirkrichtung der besagten Kraft "F".

Abweichend von der vereinfacht dargestellten zylindrischen Form des Ventilkörpers 2 mit einem durchgängigen Durchmesser kann der Ventilkörper 2 auch im Verlauf seiner Bauhöhe wechselnde Durchmesser aufweisen. Selbiges gilt für den Raum respektive die Bohrung 5, in welchem/r der Ventilkörper 2 eingesteckt ist (nicht zeichnerisch dargestellt). Ebenso können im Verlauf der besagten Bauhöhe bzw. Ventilhöhe unterschiedliche Drücke anliegen. Entscheidend für die Funktion ist jedoch die aus allen Kältemittel- und Umgebungsdrücken mit ihren jeweiligen Wirkflächen und ausführungsabhängigen weiteren Kräften (z.B. Reibkräfte, Gewichtskräfte) resultierende axiale Kraftkomponente "F", die in Richtung der Außenseite (Umgebungsdruckbereich 4) wirken muss.

Der Ventilkörper 2 weist gemäß einer ersten bevorzugten Ausführungsvariante der Erfindung umgebungsdruckbereichsseitig zwei annähernd radial gegenüberliegend angeordnete Axialvorsprünge 12a, 12b auf (durchgehende Linienführung), welche Radialvorsprünge 12a, 12b bevorzugt einstückig mit dem Ventilkörper 2 ausgebildet sind. Die Radialvorsprünge 12a, 12b dringen infolge der vorbeschriebenen Axialverschiebung des Ventilkörpers 2 in den vom Nutenring 8 umgebenden Raum 13 formschlüssig ein und bilden so jeweils in radialer Richtung eine teilkreisartige Begrenzungsfläche 14 für den Nutenring 8 vorzugsweise derart aus, dass sich der Nutenring 8 an besagte Begrenzungsflächen 14 anschmiegt. Die Begrenzungsflächen 14 sind dabei in Wirkrichtung der Kraft "F" orientiert. Hierdurch ist der Nutenring 8 radial fixiert. Eine Relativbewegung des Nutenrings 8 nach radial innen ist wirkungsvoll verhindert.

Die Kontaktfläche 11 und die Begrenzungsflächen 14 stehen demgemäß senkrecht aufeinander. Wie insbesondere den Fig. 2 und 3 zu entnehmen ist, weist der Nutenring 8 einen rechteckigen Querschnitt mit ebenfalls rechtwinklig zueinander angeordnete Außenflächen auf. Hierdurch ist der zwischen dem Nutenring 8 und dem Ventilkörper 2 mit den Axialvorsprüngen 12a, 12b realisierte Formschluss besonders wirkungsvoll. Alternativ kann selbstverständlich auch ein quadratischer Querschnitt des Nutenrings 8 vorgesehen sein (nicht zeichnerisch dargestellt).

Wie bereits oben beschrieben, sind die besagten Enden 10a, 10b nach radial innen gerichtet oder wölben sich zumindest teilweise nach radial innen vor. Alternativ zur vorstehenden ersten Ausführungsvariante der Erfindung können gemäß einer zweiten und ebenfalls in Fig. 1 gezeigten Ausführungsvariante durch geschickte Anordnung von Axialvorsprüngen 12a', 12b' und vorliegend weiter 12c' (gestrichelte Linienführung) die Enden 10a, 10b in Umfangsrichtung fixiert werden, indem zwei Axialvorsprünge 12a', 12b' unmittelbar benachbart zu besagten nach radial innen gerichteten Enden 10a, 10b bzw. zu deren Vorwölbungen angeordnet sind. Hierdurch ist der besagte Formschluss zwischen dem Nutenring 8 und dem Ventilkörper 2 noch weiter verbessert. Eine etwaige unerwünschte Bewegung des Nutenrings 8 in Umfangsrichtung relativ zum Ventilkörper 2 ist hierdurch wirkungsvoll verhindert.

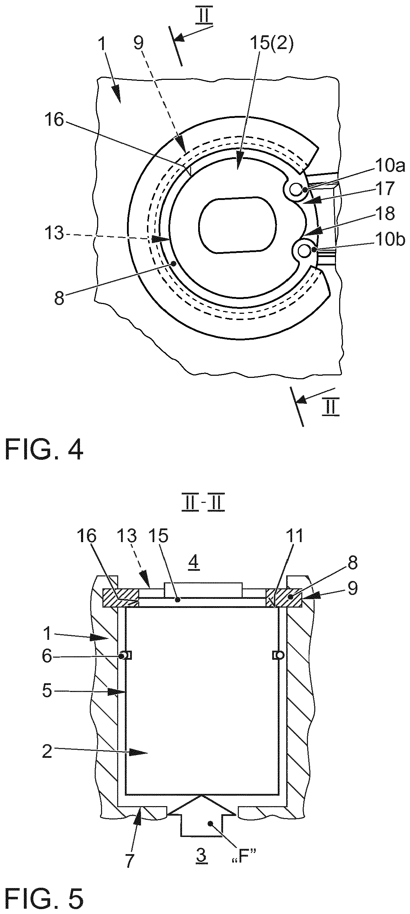

Ausführungsbeispiel, das nicht unter dem Gegenstand der Erfindung steht (Fig. 4 und 5: Die dritte Ausführungsvariante unterscheidet sich zu den vorbeschriebenen dadurch, dass lediglich ein einziger, im Wesentlichen zylindrisch ausgebildeter Axialvorsprung 15 vorgesehen ist, der koaxial zum zylindrischen Ventilkörper 2 angeordnet ist. Der besagte Axialvorsprung 15 bildet weitestgehend bzw. überwiegend eine ringförmige Begrenzungsfläche 16 aus, die lediglich unterbrochen ist durch zu den gelochten Enden 10a, 10b des Nutenrings 8 korrespondierende Ausnehmungen 17, 18 in der Umfangsfläche des Axialvorsprungs 15. Die Ausnehmungen 17, 18 nehmen die nach radial innen gerichteten oder reichenden gelochten Enden 10a, 10b formschlüssig auf und fixieren diese in Umfangsrichtung. Hierdurch ist ebenfalls der besagte Formschluss zwischen dem Nutenring 8 und dem Ventilkörper 2 noch weiter verbessert. Eine etwaige unerwünschte Bewegung des Nutenrings 8 in Umfangsrichtung relativ zum Ventilkörper 2 ist hierdurch wirkungsvoll verhindert.

### Bezugszeichenliste

- 1: Gehäuse
- 2: Ventilkörper
- 3: Innendruckbereich
- 4: Umgebungsdruckbereich
- 5: Bohrung
- 6: Dichtelement
- 7: Stufe
- 8: Nutenring
- 9: Ringnut
- 10a: Ende (Nutenring 8)
- 10b: Ende (Nutenring 8)
- 11: Kontaktfläche
- 12a: Axialvorsprung
- 12b: Axialvorsprung
- 12a': Axialvorsprung
- 12b': Axialvorsprung
- 12c': Axialvorsprung
- 13: Raum
- 14: Begrenzungsflächen
- 15: Axialvorsprung
- 16: Begrenzungsfläche
- 17: Ausnehmung
- 18: Ausnehmung

## Patentansprüche

1. Kältemittelverdichter, mit einem in Bezug auf die Umgebung überdruckbeaufschlagten Innendruckbereich (3) sowie mit einem Regelventil, wobei das Regelventil durch einen in einer Bohrung (5) eines Gehäuses (1) des Kältemittelverdichters axial verschiebbaren und vom Innendruckbereich (3) axial überdruckbeaufschlagten Ventilkörper (2) gebildet ist, welcher Ventilkörper (2) mittels eines Nutenringes (8) innerhalb der Bohrung (5) axial gesichert ist, indem der Ventilkörper (2) mit einer ringförmigen Kontaktfläche (11) axial am Nutenring (8) anliegt, und wobei die Kontaktfläche (11) orthogonal zur Wirkrichtung der auf den Ventilkörper (2) wirkenden axialen Kraft "F" und die zumindest eine Begrenzungsfläche (14; 16) in Wirkrichtung der besagten Kraft "F" verlaufen, **dadurch gekennzeichnet, dass** auf der umgebungsdruckbeaufschlagten Außenseite des Ventilkörpers (2) zwei oder mehr nockenartige Axialvorsprünge (12a, 12b; 12a', 12b', 12c') vorgesehen oder ausgebildet sind, welche infolge Innendruckbeaufschlagung des Ventilkörpers (2) in den vom Nutenring (8) umgebenden Raum (13) formschlüssig eindringen und teilkreisartige Begrenzungsflächen (14) ausbilden, vermittels derer der Nutenring (8) radial fixiert ist.

2. Kältemittelverdichter nach Anspruch 1, **dadurch gekennzeichnet, dass** der Nutenring (8) einen rechteckigen oder quadratischen Querschnitt aufweist.

3. Kältemittelverdichter nach Anspruch 1 oder 2, **dadurch gekennzeichnet, dass** der Nutenring (8) zwei nach radial innen gerichtete oder vorwölbende gelochte Enden (10a, 10b) aufweist und besagte Enden (10a, 10b) von je einem Axialvorsprung (12a', 12b') in Umfangsrichtung fixiert sind.

4. Kältemittelverdichter nach einem der Ansprüche 1 bis 3, **dadurch gekennzeichnet, dass** dieser ein Kältemittelverdichter des Schwenkscheibentyps, Taumelscheibentyps oder Schwenkringtyps mit einem durch einen Ventilkörper (2) gebildeten Regelventil zur variablen Einstellung eines Kolbenhubs oder zum Ein- und Ausschalten des Kältemittelverdichters ist.

## Claims

1. Refrigerant compressor, having an internal pressure region (3) which is subjected to positive pressure in relation to the surroundings, and having a regulating valve, wherein the regulating valve is formed by a valve body (2) which is axially displaceable in a bore (5) of a housing (1) of the refrigerant compressor and which is subjected to positive pressure loading axially by the internal pressure region (3), which valve body (2) is secured axially within the bore (5) by means of a groove ring (8) by virtue of the valve body (2) bearing with a ring-shaped contact surface (11) axially against the groove ring (8), and wherein the contact surface (11) runs orthogonally with respect to the direction of action of the axial force "F" acting on the valve body (2), and the at least one delimiting surface (14; 16) runs in the direction of action of said force "F", **characterized in that** two or more cam-like axial projections (12a, 12b; 12a', 12b', 12c') are provided or formed on the outer side, which is exposed to ambient pressure, of the valve body (2), which axial projections, as a result of the valve body (2) being subjected to internal pressure loading, engage in positively locking fashion into the space (13) surrounded by the groove ring (8) and form circular-segment-like delimiting surfaces (14) by means of which the groove ring (8) is fixed radially.

2. Refrigerant compressor according to Claim 1, **characterized in that** the groove ring (8) has a rectangular or square cross section.

3. Refrigerant compressor according to Claim 1 or 2, **characterized in that** the groove ring (8) has two radially inwardly directed or protruding holed ends (10a, 10b), and said ends (10a, 10b) are fixed in the circumferential direction by in each case one axial projection (12a' 12b').

4. Refrigerant compressor according to one of Claims 1 to 3, **characterized in that** said refrigerant compressor is a refrigerant compressor of swivel-plate, swashplate or swivel-ring type, with a regulating valve which is formed by a valve body (2) and which serves for the variable adjustment of a piston stroke or for the activation and deactivation of the refrigerant compressor.

## Revendications

1. Compresseur de réfrigérant, avec une zone de pression intérieure (3) soumise à une surpression par rapport à l'ambiance ainsi qu'avec une soupape de réglage, dans lequel la soupape de réglage est formée par un corps de soupape (2) déplaçable axialement dans un alésage (5) d'un boîtier (1) du compresseur de réfrigérant et soumis à une surpression axialement à partir de la zone de pression intérieure (3), corps de soupape (2) qui est bloqué axialement à l'intérieur de l'alésage (5) au moyen d'un circlip (8), par le fait que le corps de soupape (2) s'applique axialement par une face de contact annulaire (11) sur le circlip (8), et dans lequel la face de contact (11) est orthogonale à la direction d'action de la force axiale "F" agissant sur le corps de soupape (2) et ladite au moins une face de limitation (14; 16) s'étend dans la direction d'action de ladite force "F", **caractérisé en ce qu'**il est prévu ou formé sur le côté extérieur du corps de soupape (2) soumis à la pression ambiante deux ou plusieurs saillies axiales de type came (12a, 12b; 12a', 12b', 12c'), qui par suite de l'exposition à la pression intérieure du corps de soupape (2) pénètrent par emboîtement dans l'espace (13) entourant le circlip (8) et forment des faces de limitation (14) en forme de parties de cercle, au moyen desquelles le circlip (8) est fixé radialement.

2. Compresseur de réfrigérant selon la revendication 1, **caractérisé en ce que** le circlip (8) présente une section transversale rectangulaire ou carrée.

3. Compresseur de réfrigérant selon la revendication 1 ou 2, **caractérisé en ce que** le circlip (8) présente deux extrémités trouées (10a, 10b) dirigées radialement vers l'intérieur ou courbées vers l'avant et lesdites extrémités (10a, 10b) sont fixées en direction périphérique respectivement par une saillie axiale (12a', 12b').

4. Compresseur de réfrigérant selon l'une quelconque des revendications 1 à 3, **caractérisé en ce que** celui-ci est un compresseur de réfrigérant du type à disque pivotant, du type à plateau en nutation ou du type à anneau pivotant, avec une soupape de réglage formée par un corps de soupape (2) pour le réglage variable d'une course de piston ou pour la mise en marche et l'arrêt du compresseur de réfrigérant.
